# EUROPEAN PATENT SPECIFICATION

(11) **EP 4 403 672 B1**
(45) Date of publication and mention of the grant of the patent: **19.11.2025**
(21) Application number: 23216362.6
(22) Date of filing: 13.12.2023
(51) Int. Cl.: C25B 1/04, C25B 9/73, C25B 15/08, C25B 9/77

(54) **WATER ELECTROLYSIS DEVICE**
WASSERELEKTROLYSEVORRICHTUNG
DISPOSITIF D'ÉLECTROLYSE DE L'EAU

(30) Priority: 27.12.2022 JP 2022209906
(43) Date of publication of application: 24.07.2024
(73) Proprietor: TOYOTA JIDOSHA KABUSHIKI KAISHA, Toyota-shi, Aichi-ken, 471-8571 (JP)
(72) Inventor: KUSAKARI, Toshiaki, Toyota-shi, 471-8571 (JP)
(74) Representative: J A Kemp LLP

(56) References cited:
- CN-A- 113 101 820
- JP-A- 2012 052 208
- JP-A- 2016 056 397

## Description

### BACKGROUND OF THE INVENTION

### 1. Field of the Invention

The present disclosure relates to a water electrolysis device.

### 2. Description of Related Art

Japanese Unexamined Patent Application Publication No. 2012-052208 (JP 2012-052208 A) discloses supplying diluting air to a gas-liquid separator that separates water and oxygen in a water electrolysis device, in order to dilute hydrogen that has become incorporated.

### SUMMARY OF THE INVENTION

There is concern that uneven distribution of hydrogen will occur even when air for dilution is supplied to the gas-liquid separator, and portions may remain locally in which the hydrogen is undiluted.
The present disclosure provides a water electrolysis device capable of suppressing concentration of hydrogen that has become incorporated in the water supply side passage.

A water electrolysis device according to a first aspect of the present application is configured to obtain hydrogen and oxygen by performing electrolysis of water with a plurality of water electrolysis cells, and includes a water electrolysis stack that includes the water electrolysis cells, a water supply side passage including first piping through which water supplied to the water electrolysis stack flows, and second piping, a hydrogen side passage through which hydrogen generated in the water electrolysis stack flows, a gas-liquid separator that is provided in the water supply side passage and that is configured to perform gas-liquid separation of a fluid containing oxygen and water discharged from the water electrolysis stack, and a hydrogen combustion member that contains a hydrogen combustion catalyst and that is disposed on an inner side of the second piping. The second piping connects the water electrolysis stack and the gas-liquid separator.

The water electrolysis device according to the first aspect of the present disclosure may further include an agitation member disposed between the water electrolysis stack and the hydrogen combustion member in the second piping.

In the water electrolysis device according to the first aspect of the present disclosure, the second piping may include a first piping portion of which a pipe axis is inclined within a range of 30° to 90° with respect to a horizontal direction, in which water discharged from the water electrolysis stack flows upward from below.
The hydrogen combustion member may be disposed on an inner side of the first piping portion.

In the water electrolysis device according to the first aspect of the present disclosure, the pipe axis of the first piping portion may be inclined within a range of 60° to 90° with respect to the horizontal direction.

In the water electrolysis device according to the first aspect of the present disclosure, the pipe axis of the first piping portion may be inclined within a range of 75° to 90° with respect to the horizontal direction.

The water electrolysis device according to the first aspect of the present disclosure may further include a protruding portion, the second piping may include a second piping portion of which a pipe axis is horizontal, or is inclined in a range of 45° or less with respect to a horizontal direction, the hydrogen combustion member may be disposed on an inner side of the second piping portion, the protruding portion may be disposed on the inner side of the second piping portion and may be configured to divide a gaseous portion between the hydrogen combustion member and the gas-liquid separator. The gaseous portion may be contained in the fluid containing oxygen and water discharged from the water electrolysis stack (20).

According to the present disclosure, hydrogen can be consumed and reduced before reaching the gas-liquid separator, and accordingly the concentration of hydrogen incorporated in the water supply side passage can be suppressed, and the trouble of containing hydrogen can be suppressed.

### BRIEF DESCRIPTION OF THE DRAWINGS

Features, advantages, and technical and industrial significance of exemplary embodiments of the invention will be described below with reference to the accompanying drawings, in which like signs denote like elements, and wherein:
FIG. 1 is a conceptual diagram illustrating a configuration of a water electrolysis device 10;
FIG. 2 is a conceptual diagram illustrating a configuration of a water electrolysis cell 21;
FIG. 3 is a diagram illustrating a first embodiment; and
FIG. 4 is a diagram illustrating a second embodiment.

### DETAILED DESCRIPTION OF EMBODIMENTS

### 1. Configuration of Water Electrolysis Device

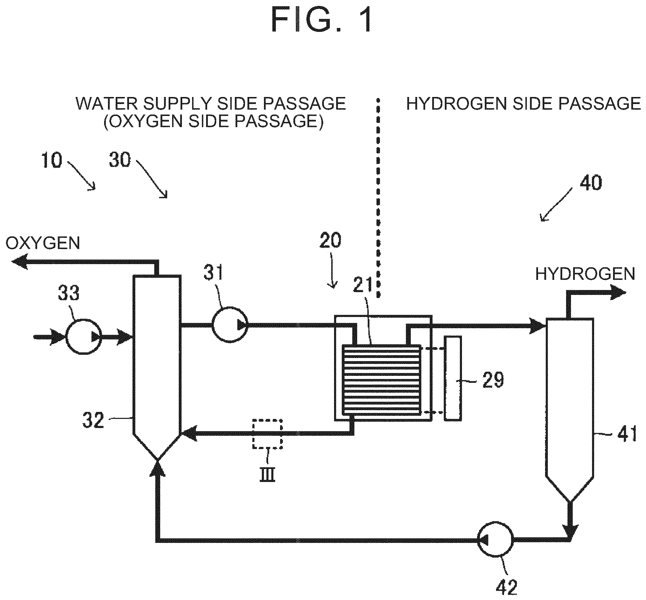

FIG. 1 conceptually represents a water electrolysis device 10 according to an embodiment.
In the present embodiment, the water electrolysis device 10 includes a water electrolysis stack 20, a water supply side passage (oxygen side passage) 30 and a hydrogen side passage 40. In the water electrolysis device 10, water is supplied from the water supply side passage 30 to water electrolysis cells 21 provided in the water electrolysis stack 20, and the water is decomposed into hydrogen and oxygen by application of electricity thereto, thereby yielding hydrogen that is separated to the hydrogen side passage 40.

### 1.1. Water Electrolysis Stack and Water Electrolysis Cell

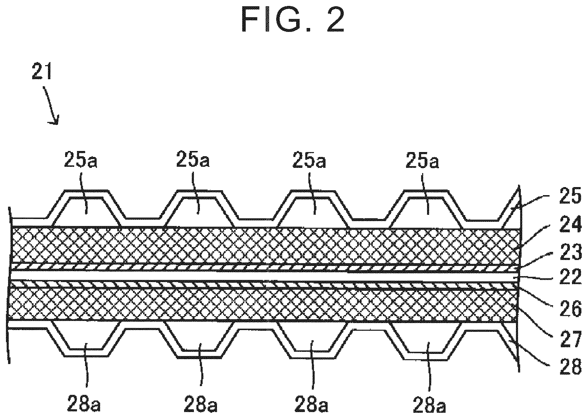

FIG. 2 conceptually illustrates an embodiment of the water electrolysis cell 21. The water electrolysis cell 21 is a unit element for decomposing water into hydrogen and oxygen, and a plurality of such water electrolysis cells 21 is stacked and disposed in the water electrolysis stack 20.
The water electrolysis cells 21 are known water electrolysis cells, and each water electrolysis cell 21 according to the present embodiment is made up of a plurality of layers, one of which serves as an oxygen generating electrode (anode), and another of which serves as a hydrogen generating electrode (cathode), with a solid polymer electrolyte membrane 22 interposed therebetween.
The material making up the solid polymer electrolyte membrane 22 is a solid polymer material, examples of which include an ion exchange membrane that has proton conductivity, which is made of a fluororesin, a hydrocarbon resin material, or the like. This exhibits good proton conductivity (electrical conductivity) under wet conditions. A more specific example is Nafion (registered trademark), which is a perfluorosulfonic acid membrane.

The oxygen generating electrode (anode) is provided with an oxygen electrode catalyst layer 23, an oxygen electrode gas diffusion layer 24, and an oxygen electrode separator 25 in this order from the solid polymer electrolyte membrane 22 side. The oxygen electrode catalyst layer 23 is a layer made of an electrode catalyst containing at least one or more of noble metal catalysts such as platinum (Pt), ruthenium (Ru), iridium (Ir), and so forth, and oxides thereof.
The oxygen electrode gas diffusion layer 24 is made up of a member having gas permeability and electroconductivity. Specific examples include porous electroconductive members made of metal fibers, metal particles, and so forth.
The oxygen electrode separator 25 has channels 25a through which water supplied to the oxygen electrode gas diffusion layer 24, generated oxygen, and excess water flow.

The hydrogen generating electrode (cathode) is provided on a face of the solid polymer electrolyte membrane 22 opposite to the face on which the oxygen generating electrode is disposed, and a hydrogen electrode catalyst layer 26, a hydrogen electrode gas diffusion layer 27, and a hydrogen electrode separator 28 are provided in this order from the solid polymer electrolyte membrane 22 side.
Examples of the hydrogen electrode catalyst layer 26 include a layer containing Pt or the like.
The hydrogen electrode gas diffusion layer 27 is made up of a member having gas permeability and electroconductivity. Specific examples include porous members such as carbon cloth, carbon paper, and so forth.
The hydrogen electrode separator 28 is a member provided with channels 28a through which generated hydrogen and accompanying water flow.

Applying electricity across the oxygen generating electrode and the hydrogen generating electrode by an electric power source 29 causes the water (H₂O) supplied to the oxygen generating electrode from the channels 25a of the oxygen electrode separator 25 to be decomposed into oxygen, electrons, and protons (H⁺) at the oxygen electrode catalyst layer 23 to which potential is applied. At this time, the protons travel through the solid polymer electrolyte membrane 22 to the hydrogen electrode catalyst layer 26. On the other hand, the electrons separated at the oxygen electrode catalyst layer 23 reach the hydrogen electrode catalyst layer 26 through an external circuit. The protons then receive electrons at the hydrogen electrode catalyst layer 26, thereby generating hydrogen. The generated hydrogen and the accompanying water reach the hydrogen electrode separator 28, are discharged from the channels 28a, and travel to the hydrogen side passage 40. Note that the oxygen separated at the oxygen electrode catalyst layer 23 and excess water reach the oxygen electrode separator 25, are discharged from the channels 25a, and travel to the water supply side passage 30.

### 1.2. Water supply side passage (oxygen side passage)

The water supply side passage (oxygen side passage) 30 is a passage including piping for supplying water to the water electrolysis cells 21 of the water electrolysis stack 20 in order to obtain oxygen.
In the present embodiment, water is supplied toward the water electrolysis stack 20 by a pump 31 on the water supply side passage 30. The piping through which water supplied toward the water electrolysis stack 20 flows can be regarded as an example of first piping. A cooler for cooling the water or an ion exchanger for removing ions contained in the water may be disposed between the pump 31 and the water electrolysis stack 20 as necessary.
Further, on the water supply side passage 30, oxygen generated at the water electrolysis stack 20 and unused water are discharged from the water electrolysis stack 20 and supplied to a gas-liquid separator 32. The piping connecting the water electrolysis stack 20 and the gas-liquid separator 32 can be regarded as an example of second piping. Water and oxygen are separated in the gas-liquid separator 32, the separated oxygen is discharged, and the water is supplied to the pump 31 again. Note that any insufficient water is supplied from the pump 33 to the gas-liquid separator 32.
Each of the pieces of equipment described above is connected by piping, forming a fluid passage. Of the piping in the present disclosure, a hydrogen combustion member 34 is disposed in the piping between the water electrolysis stack 20 and the gas-liquid separator 32. This will be described below.

### 1.2.1. First Embodiment

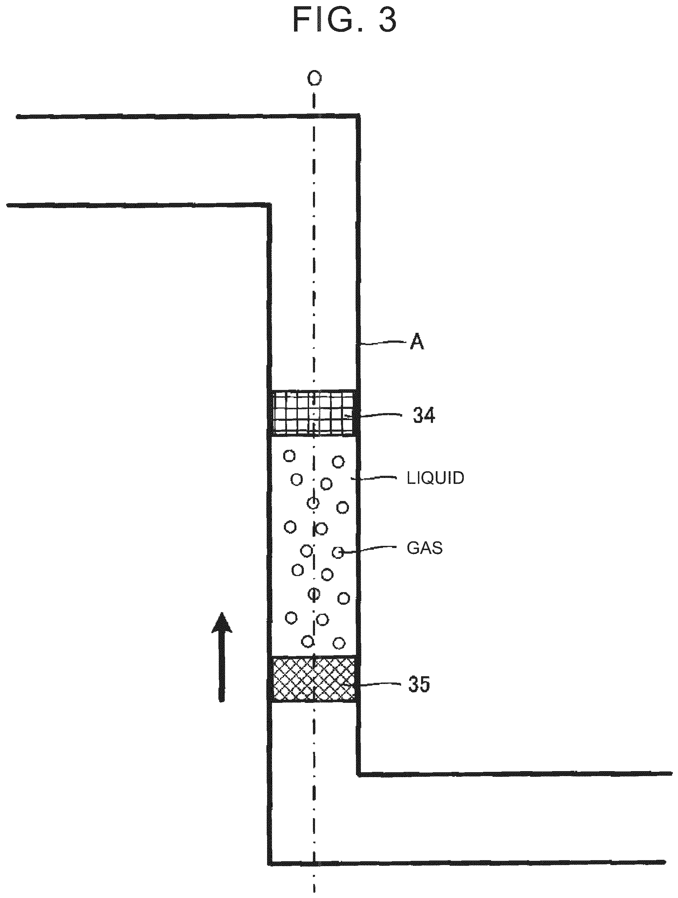

FIG. 3 is a diagram illustrating the hydrogen combustion member 34 according to a first embodiment and the form of placement thereof, and represents inside of the piping at a portion indicated by III in FIG. 1. Note that as described above, FIG. 1 is a diagram conceptually representing the water electrolysis device 10 according to an embodiment, and accordingly the shape of the portion III illustrated in FIG. 1 does not have to be a rectilinear shape as illustrated in FIG. 1.

**In** the water electrolysis device of the present disclosure, the hydrogen combustion member is disposed on an inner side of the piping through which fluid (water and oxygen, and unintentionally-incorporated hydrogen) discharged from the water electrolysis stack is guided from the water electrolysis stack to the gas-liquid separator, regardless of the specific form thereof.
The hydrogen combustion member is a member provided with a hydrogen combustion catalyst, and promotes reaction between hydrogen and oxygen that come into contact with the catalyst (causes combustion of the hydrogen) so as to be converted into water. A known hydrogen combustion catalyst can be used, examples of which include platinum, palladium, ruthenium, rhodium, nickel, and so forth, although not limited thereto in particular.
More specifically, the hydrogen combustion member has the hydrogen combustion catalyst carried on a surface of a carrier having a plurality of holes through which fluid can pass (surface including inner surfaces of the holes). For the carrier, a net (mesh) or a columnar member (e.g., a honeycomb structure) provided with a plurality of holes (channels) in an axial direction can be used, for example. Examples of the material of the carrier include ceramics and so forth.
A hydrogen combustion member such as this is disposed on the inner side of the piping, and is configured such that the fluid flowing through the inner side of the piping passes through the hydrogen combustion member.
The number of hydrogen combustion members disposed may be one, or a plurality thereof may be disposed along the direction in which the fluid flows. The more frequent the opportunity for the fluid to come into contact with the hydrogen combustion member is, the more the amount of hydrogen can be reduced, so as to suppress the concentration thereof. However, the hydrogen combustion member is a pressure loss factor, and accordingly disposing thereof in the water supply side passage of the water electrolysis device is performed within a range in which pressure loss is tolerable.

**In** the first embodiment, as illustrated in FIG. 3, a piping portion A in which the hydrogen combustion member 34 is disposed is configured such that an axial line (pipe axis) O of the piping is vertical (90° to horizontal). It will be assumed that the fluid flows upward from below as indicated by a straight arrow in FIG. 3. The piping portion A can be regarded as an example of a first piping portion.
According to such a configuration, gaseous components contained in the fluid can be dispersed with respect to the liquid component to reduce non-uniformity, and the opportunities of the gas coming into contact with the catalyst of the hydrogen combustion member 34 can be increased.
In the first embodiment, the angle of the axial line O of the piping in the piping portion A is not limited to being vertical (90°), and it is sufficient for the configuration to be such that fluid flows upward from below at some extent of an angle. Specifically, the angle of the axial line O of the piping is 30° or more and 90° or less with respect to a horizontal direction. However, from the perspective of promoting dispersion of the gaseous components with little non-uniformity as described above, an angle that is close to 90° is effective, and accordingly the angle may be 60° or more, and 75° or more.

**In** the present embodiment, an agitation member 35 is further disposed upstream of the hydrogen combustion member 34 (between the water electrolysis stack 20 and the hydrogen combustion member 34). The agitation member 35 is a member that is capable of agitating the fluid flowing therethrough, thereby further dispersing the gaseous components contained in the fluid into the liquid component.
The specific form of the agitation member 35 is not limited in particular, as long as agitation of the fluid can be realized. A net (mesh), rotary blades that rotate with the flow of fluid, projections that cause turbulence (such as those which produces a vortex on the downstream side thereof), and so forth, can be used.
The position of the agitation member 35 is not limited in particular, as long as it is disposed between the water electrolysis stack 20 and the hydrogen combustion member 34. However, the agitation member 35 may be disposed within the piping portion A from the perspective of efficiently reflecting the agitating effect of the agitation member 35 at the hydrogen combustion member 34.

### 1.2.2. Second Embodiment

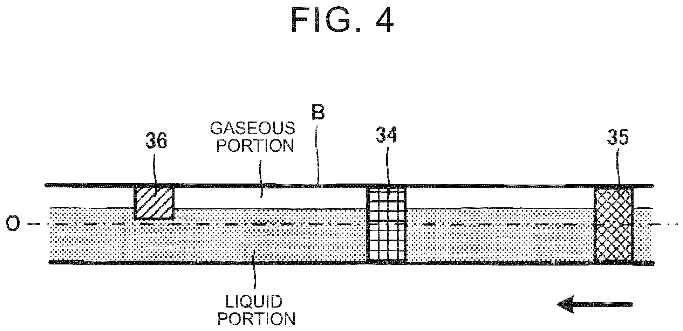

FIG. 4 is a diagram illustrating the hydrogen combustion member 34 according to a second embodiment and the form of placement thereof, and represents inside of the piping of the portion indicated by III in FIG. 1.

In the present embodiment, the hydrogen combustion member 34 is disposed on the inner side of the piping through which fluid (water and oxygen, and unintentionally-contained hydrogen) discharged from the water electrolysis stack 20 is guided from the water electrolysis stack 20 to the gas-liquid separator 32, in the same way as described in the first embodiment. The form of the hydrogen combustion member 34 can be thought of in the same manner as described above, and accordingly description thereof will be omitted.

In the second embodiment, as illustrated in FIG. 4, a piping portion B in which the hydrogen combustion member 34 is disposed is configured such that the axial line O of the piping is horizontal (0° to horizontal). The piping portion B can be regarded as an example of a second piping portion. The fluid flows from right to left in the plane of the drawing as indicated by a straight arrow in FIG. 4. In such a configuration as well, the fluid passes through the hydrogen combustion member 34, and accordingly the gas comes into contact with the catalyst of the hydrogen combustion member 34, resulting in combustion of the hydrogen, whereby the amount of hydrogen can be reduced, thereby suppressing the concentration thereof.
In the present embodiment as well, the agitation member 35 may be disposed upstream of the hydrogen combustion member 34 (between the water electrolysis stack 20 and the hydrogen combustion member 34). The agitation member 35 is as described above. As a result, the fluid that is flowing can be agitated, the gaseous component contained in the fluid can be dispersed in the liquid component, and the opportunities of the gas coming into contact with the catalyst of the hydrogen combustion member 34 can be increased.

On the other hand, when the axial line O of the piping is horizontal as in the present embodiment, the fluid naturally separates into a gaseous portion in which gas flows at an upper side in the pipe, and a liquid portion in which liquid flows at a lower side in the pipe, as illustrated in FIG. 4. Disposing the hydrogen combustion member 34 in the pipe in such a separated state may result in a portion of the hydrogen combustion member 34 that is in contact with the gas of the gaseous portion exhibiting vigorous combustion, and there is concern that the temperature will rise, and that the combustion will move away from the hydrogen combustion member 34 and be carried downstream in the gaseous portion. Accordingly, in the present embodiment, a protruding portion 36 that divides the gaseous portion is provided on the inner side of the piping between the hydrogen combustion member 34 and the gas-liquid separator 32 (i.e., downstream from the hydrogen combustion member 34), as illustrated in FIG. 4.
The protruding portion 36 is a protruding member that protrudes from an inner wall of the piping portion B, having a height capable of dividing the gaseous portion, and the protruding portion 36 may partition the gaseous portion and a distal end thereof may reach the liquid portion. Thus, the gaseous portion can be divided in a sure manner.
The protruding portion 36 can suppress the combustion from departing from the hydrogen combustion member 34 and being carried downstream in the gaseous portion.

The form in which the protruding portion 36 is disposed in this way is not limited to when the angle of the axial line O of the pipe is horizontal (0° from horizontal) and may include arrangements in which the piping extends laterally, inclined at a somewhat shallow angle. Specifically, the angle of the axial line O of the piping is 0° or more and 45° or less with respect to the horizontal direction.

### 1.3. Hydrogen Side Passage

The hydrogen side passage 40 is a passage including piping for extracting hydrogen separated at the water electrolysis stack 20. Hydrogen and water discharged from the water electrolysis cells 21 of the water electrolysis stack 20 are supplied to a gas-liquid separator 41 through the hydrogen side passage 40. The gas-liquid separator 41 separates the water and the hydrogen. The hydrogen separated by the gas-liquid separator 41 is collected, dehumidified and so forth, and stored in a tank. The water separated by the gas-liquid separator 41 is fed by the pump 42 to the gas-liquid separator 32 on the water supply side passage 30, and reused. Each of these pieces of equipment is connected by piping.

### 2. Effects, etc.

According to the present embodiment, at least part of the hydrogen can be removed from the fluid flowing through the piping on the water supply side passage before reaching the gas-liquid separator, and accordingly the hydrogen can be consumed and reduced, thereby suppressing the concentration thereof. Accordingly, the trouble of a large amount of hydrogen being contained can be suppressed without mixing in gas for dilution. Even when gas is mixed in for dilution, the concentration of hydrogen itself is already suppressed, and accordingly the occurrence of locally high hydrogen concentration portions can be suppressed.

## Claims

1. A water electrolysis device (10) that is configured to obtain hydrogen and oxygen by performing electrolysis of water with a plurality of water electrolysis cells, the water electrolysis device (10) comprising:
a water electrolysis stack (20) that includes the water electrolysis cells (21);
a water supply side passage (30) including first piping through which water supplied to the water electrolysis stack (20) flows, and second piping;
a hydrogen side passage (40) through which hydrogen generated in the water electrolysis stack (20) flows;
a gas-liquid separator (32) that is provided in the water supply side passage (30) and that is configured to perform gas-liquid separation of a fluid containing oxygen and water discharged from the water electrolysis stack (20); and
a hydrogen combustion member (34) that contains a hydrogen combustion catalyst and that is disposed on an inner side of the second piping, the second piping connecting the water electrolysis stack (20) and the gas-liquid separator (32).

2. The water electrolysis device (10) according to claim 1, further comprising an agitation member (35) disposed between the water electrolysis stack (20) and the hydrogen combustion member (34) in the second piping.

3. The water electrolysis device (10) according to claim 1 or 2, wherein
the second piping includes a first piping portion (A) of which a pipe axis (O) is inclined within a range of 30° to 90° with respect to a horizontal direction, in which water discharged from the water electrolysis stack (20) flows upward from below, and
the hydrogen combustion member (34) is disposed on an inner side of the first piping portion (A).

4. The water electrolysis device (10) according to claim 3, wherein the pipe axis (O) of the first piping portion (A) is inclined within a range of 60° to 90° with respect to the horizontal direction.

5. The water electrolysis device (10) according to claim 4, wherein the pipe axis (O) of the first piping portion (A) is inclined within a range of 75° to 90° with respect to the horizontal direction.

6. The water electrolysis device (10) according to claim 1 or 2, further comprising a protruding portion (36), wherein
the second piping includes a second piping portion (B) of which a pipe axis (O) is horizontal, or is inclined in a range of 45° or less with respect to a horizontal direction,
the hydrogen combustion member (34) is disposed on an inner side of the second piping portion (B), and
the protruding portion (36) is disposed on the inner side of the second piping portion (B) and is configured to divide a gaseous portion between the hydrogen combustion member (34) and the gas-liquid separator (35), the gaseous portion being contained in the fluid containing oxygen and water discharged from the water electrolysis stack (20).

## Patentansprüche

1. Wasserelektrolysevorrichtung (10), die zur Gewinnung von Wasserstoff und Sauerstoff durch Elektrolyse von Wasser mit einer Vielzahl von Wasserelektrolysezellen konfiguriert ist, wobei die Wasserelektrolysevorrichtung (10) umfasst:
einen Wasserelektrolysestapel (20), der die Wasserelektrolysezellen (21) enthält;
einen wasserzufuhrseitigen Durchgang (30) mit einer ersten Rohrleitung, durch die dem Wasserelektrolysestapel (20) zugeführtes Wasser fließt, und einer zweiten Rohrleitung;
einen wasserstoffseitigen Durchgang (40), durch den der im Wasserelektrolysestapel (20) erzeugte Wasserstoff fließt;
einen Gas-Flüssigkeits-Abscheider (32), der in dem wasserzufuhrseitigen Durchgang (30) vorgesehen ist und der so konfiguriert ist, dass er eine Gas-Flüssigkeits-Abscheidung eines sauerstoff- und wasserhaltigen Fluids durchführt, und aus dem Wasserelektrolysestapel (20) abgeleitet wird; und
ein Wasserstoffverbrennungselement (34), das einen Wasserstoffverbrennungskatalysator enthält und das an einer Innenseite der zweiten Rohrleitung angeordnet ist, wobei die zweite Rohrleitung den Wasserelektrolysestapel (20) und den Gas-Flüssigkeits-Abscheider (32) miteinander verbindet.

2. Wasserelektrolysevorrichtung (10) nach Anspruch 1, die ferner ein Rührelement (35) umfasst, das zwischen dem Wasserelektrolysestapel (20) und dem Wasserstoffverbrennungselement (34) in der zweiten Rohrleitung angeordnet ist.

3. Wasserelektrolysevorrichtung (10) nach Anspruch 1 oder 2, wobei
die zweite Rohrleitung einen ersten Rohrleitungsabschnitt (A) aufweist, dessen Rohrachse (O) in einem Bereich von 30° bis 90° gegenüber einer horizontalen Richtung geneigt ist, in der das von dem Wasserelektrolysestapel (20) abgegebene Wasser von unten nach oben fließt, und
das Wasserstoffverbrennungselement (34) an einer Innenseite des ersten Rohrleitungsabschnitts (A) angeordnet ist.

4. Wasserelektrolysevorrichtung (10) nach Anspruch 3, wobei die Rohrachse (O) des ersten Rohrleitungsabschnitts (A) in einem Bereich von 60° bis 90° gegenüber der horizontalen Richtung geneigt ist.

5. Wasserelektrolysevorrichtung (10) nach Anspruch 4, wobei die Rohrachse (O) des ersten Rohrleitungsabschnitts (A) in einem Bereich von 75° bis 90° gegenüber der horizontalen Richtung geneigt ist.

6. Wasserelektrolysevorrichtung (10) nach Anspruch 1 oder 2, die ferner einen vorspringenden Abschnitt (36) umfasst, wobei
die zweite Rohrleitung einen zweiten Rohrleitungsabschnitt (B) umfasst, dessen Rohrachse (O) horizontal ist oder in einem Bereich von 45° oder weniger in Bezug auf eine horizontale Richtung geneigt ist,
das Wasserstoffverbrennungselement (34) an einer Innenseite des zweiten Rohrleitungsabschnitts (B) angeordnet ist, und
der vorstehende Abschnitt (36) an der Innenseite des zweiten Rohrleitungsabschnitts (B) angeordnet ist und so konfiguriert ist, dass er einen gasförmigen Abschnitt zwischen dem Wasserstoffverbrennungselement (34) und dem Gas-Flüssigkeits-Abscheider (35) aufteilt, wobei der gasförmige Abschnitt in dem sauerstoff- und wasserhaltigen Fluid enthalten ist, das von dem Wasserelektrolysestapel (20) abgegeben wird.

## Revendications

1. Dispositif d'électrolyse d'eau (10) qui est configuré pour obtenir de l'hydrogène et de l'oxygène par réalisation d'une électrolyse d'eau avec une pluralité de cellules d'électrolyse d'eau, le dispositif d'électrolyse d'eau (10) comprenant :
un empilement d'électrolyse d'eau (20) qui comporte les cellules d'électrolyse d'eau (21) ;
un passage côté alimentation en eau (30) comportant une première tuyauterie par laquelle de l'eau fournie à l'empilement d'électrolyse d'eau (20) s'écoule, et une deuxième tuyauterie ;
un passage côté hydrogène (40) par lequel de l'hydrogène généré dans l'empilement d'électrolyse d'eau (20) s'écoule ;
un séparateur gaz-liquide (32) qui est prévu dans le passage côté alimentation en eau (30) et qui est configuré pour réaliser une séparation gaz-liquide d'un fluide contenant de l'oxygène et de l'eau déchargé à partir de l'empilement d'électrolyse d'eau (20) ; et
un élément de combustion d'hydrogène (34) qui contient un catalyseur de combustion d'hydrogène et qui est disposé sur un côté interne de la deuxième tuyauterie, la deuxième tuyauterie reliant l'empilement d'électrolyse d'au (20) et le séparateur gaz-liquide (32).

2. Dispositif d'électrolyse d'eau (10) selon la revendication 1, comprenant en outre un élément d'agitation (35) disposé entre l'empilement d'électrolyse d'eau (20) et l'élément de combustion d'hydrogène (34) dans la deuxième tuyauterie.

3. Dispositif d'électrolyse d'eau (10) selon la revendication 1 ou 2, dans lequel
la deuxième tuyauterie comporte une première portion de tuyauterie (A) dont un axe de tuyau (O) est incliné dans une plage de 30° à 90° vis-à-vis d'une direction horizontale, dans laquelle de l'eau déchargée à partir de l'empilement d'électrolyse d'eau (20) s'écoule vers le haut à partir du bas, et
l'élément de combustion d'hydrogène (34) est disposé sur un côté interne de la première portion de tuyauterie (A).

4. Dispositif d'électrolyse d'eau (10) selon la revendication 3, dans lequel l'axe de tuyau (O) de la première portion de tuyauterie (A) est incliné dans une plage de 60° à 90° vis-à-vis de la direction horizontale.

5. Dispositif d'électrolyse d'eau (10) selon la revendication 4, dans lequel l'axe de tuyau (O) de la première portion de tuyauterie (A) est incliné dans une plage de 75° à 90° vis-à-vis de la direction horizontale.

6. Dispositif d'électrolyse d'eau (10) selon la revendication 1 ou 2, comprenant en outre une portion saillante (36), dans lequel
la deuxième tuyauterie comporte une deuxième portion de tuyauterie (B) dont un axe de tuyau (O) est horizontal, ou est incliné dans une plage de 45° ou moins vis-à-vis d'une direction horizontale,
l'élément de combustion d'hydrogène (34) est disposé sur un côté interne de la deuxième portion de tuyauterie (B), et
la portion saillante (36) est disposée sur le côté interne de la deuxième portion de tuyauterie (B) et est configurée pour diviser une portion gazeuse entre l'élément de combustion d'hydrogène (34) et le séparateur gaz-liquide (35), la portion gazeuse étant contenue dans le fluide contenant de l'oxygène et l'eau déchargée à partir de l'empilement d'électrolyse d'eau (20).
